## Europäisches Patentamt

(19) **European Patent Office**

**Office européen des brevets**

(11) Veröffentlichungsnummer: **0 087 670**
**B1**

(12) **EUROPÄISCHE PATENTSCHRIFT**

(45) Veröffentlichungstag der Patentschrift:
21.08.85

(51) Int. Cl.⁴: **B 01 J 10/00, C 08 G 65/44**

(21) Anmeldenummer: **83101432.9**

(22) Anmeldetag: **15.02.83**

(54) Verfahren zur Vermeidung einer explosiblen Gasphase bei Gas/flüssig-Reaktionen.

(30) Priorität: **25.02.82 DE 3206661**

(43) Veröffentlichungstag der Anmeldung:
**07.09.83 Patentblatt 83/36**

(45) Bekanntmachung des Hinweises auf die Patenterteilung:
**21.08.85 Patentblatt 85/34**

(84) Benannte Vertragsstaaten:
**CH DE FR GB LI NL**

(56) Entgegenhaltungen:
**DE - A - 2 645 780**

**CHEMIE INGENIEUR TECHNIK, Band 51, Nr. 1, Januar 1979, Seiten 8-14, Weinheim, DE, E.W. SCHOLL et al.: "Vorbeugende und konstruktive Schutzmassnahmen gegen Gas- und Staubexplosionen"**

(73) Patentinhaber: **BASF Aktiengesellschaft, Carl-Bosch-Strasse 38, D-6700 Ludwigshafen (DE)**

(72) Erfinder: **Schuster, Hans H., Dr., Luitpoldstrasse 166, D-6700 Ludwigshafen (DE)**
Erfinder: **Dreher, Hermann, Dr., Florlansring 16, D-6104 Seeheim-Jugendheim 1 (DE)**
Erfinder: **Hambrecht, Jürgen, Dr., Werderstrasse 30, D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung betrifft ein Verfahren gemäß dem Oberbegriff des Patentanspruchs 1.

In der chemischen Technik häufige Reaktionen zwischen Flüssigkeiten und Gasen finden in der Regel in der flüssigen Phase statt. Der hierbei vorauszusetzende Gas/flüssig-Stoffaustausch erfordert eine genügende Dispergierung des gasförmigen Mediums in der Flüssigkeit, um die notwendigen Austauschflächen zwischen den Phasen zu schaffen. Eine Übersicht der für diesen Zweck gebräuchlichen Apparatebauformen ist beispielsweise in CIT 52 (1980) S. 951 – 965 gegeben.

Der in der Chemietechnik vorwiegend eingesetzte Rührkessel-Reaktor wird für für Gas/flüssig-Reaktionen im Falle größerer Reaktorvolumina, höherer Drucke und Temperaturen als Reaktortyp gern vermieden. Bei statt dessen üblichen, sogenannten Submersreaktoren erfolgt der für die Gasdispergierung erforderliche Energieeintrag dann entweder durch Gaskompression oder durch Flüssigkeitsumlauf mit einer im Außenkreis liegenden Umwälzpumpe.

Eigenheit aller vorgenannten Reaktortypen ist jedoch eine im Falle geringer Gaslöslichkeiten und/oder geringer Reaktionsraten zwischen gasförmigen und flüssigen Reaktanden oberhalb der Phasentrenngrenze im Reaktor sich ausbildende zusammenhängende Gasphase.

Besonders bei bestimmten Oxidationsreaktionen, bei denen brennbare organische Medien beispielsweise mit Sauerstoff oder sauerstoffhaltigen Gasmischungen kontaktiert werden, ist das Vorhandensein bzw. die Bildung solcher zusammenhängenden Gasräume von erheblichem Nachteil, wenn nicht aus Sicherheitsgründen prohibitiv: Die Gasmischung enthält neben beträchtlichen Mengen Sauerstoff zumeist gleichzeitig Dämpfe des organischen Mediums und führt zu entsprechenden Explosions- bzw. Detonationsgefahr.

Bekannte Verfahren, z. B. gemäß der DE-OS 1 557 018, können einen Sauerstoff-Durchbruch in Richtung höherer Gasbelastung, d. h. höherer pro Flächeneinheit des Reaktorquerschnitts zugeführten Gasmengen verschieben; eine Garantie für seine Vermeidung bieten sie nicht.

Eine übliche sekundärpreventive Maßnahme zur Vermeidung explosibler Zustände ist — soweit das jeweilige Funktionsprinzip des Reaktors dies zuläßt — die Vermischung der in den zusammenhängenden Gasräumen sich sammelnden explosiblen Gasmischungen mit einem Inertgasstrom in solch einem Mischungsverhältnis, daß damit der Explosionsbereich sicher verlassen wird.

Nachteilig ist hierbei, daß wegen der besonders im Falle von Sauerstoff sehr weiten Explosionsbereiche, hohe Anteile des zuzuführenden Inertgases erforderlich sind und mit dem inertgashaltigen Abgas je nach Dampfdruck und Sättigungsgrad zwangsläufig Anteile des organischen Reaktionsmediums ausgeschleust werden. Soweit atmosphärische Immission als Entsorgungsart überhaupt zulässig ist, führt diese Verfahrensweise neben Umweltbelastung zu Wertproduktverlust hinsichtlich des Inertgases und der gasförmigen und flüssigen Reaktanden.

Enthält weiterhin das flüssige Reaktionsmedium feste Stoffe in gelöster oder suspendierter Form und muß die Ablagerung von festen Anteilen (Verkrustungen etc.) durch Flotation oder Lösungsmittelverarmung infolge Verdunstung in der Nähe der Gas/flüssig-Phasentrenngrenze vermieden werden, so muß der in den Reaktionsraum eintretende Inertgasstrom vorher in ein Sättigungsgleichgewicht mit dem in der Reaktion verwendeten Lösungsmittel gebracht werden. Die vorerwähnten Abgasverluste werden hierdurch maximiert. Ist andererseits eine derartige Abgasemission unzulässig und müssen die Abgasbestandteile zurückgehalten werden, so sind in der Regel die hierfür erforderlichen Trenn- und Aufarbeitungseinrichtungen wegen des vergleichsweise hohen Inertgasanteils besonders aufwendig.

Es stellt sich daher die Aufgabe, eine für die Durchführung von Gas/flüssig-Reaktionen geeignete Verfahrensweise zu entwickeln, die — im wesentlichen abgasfrei — die Bildung einer zusammenhängenden Gasphase im Reaktorbetrieb vermeidet und daher auch dort einsetzbar ist, wo ansonsten aus Art und Mengenverhältnis der Reaktanden mit der Bildung einer explosiblen Gasphase gerechnet werden muß.

Diese Aufgabe wird durch die Merkmale der Patentansprüche gelöst.

Für die Lösung der Aufgabe besonders geeignet ist die Anwendung des bekannten Tauchstrahlprinzips, bei dem ein scharfer abwärts gerichteter Flüssigkeitsstrahl durch die Gasphase hindurch auf eine Flüssigkeitsoberfläche trifft, diese durchbricht und in das Flüssigkeitsvolumen eindringt (plunging jet). Für eine kurze Eintauchtiefe ist dabei der Flüssigkeitsstrahl von einem Mantel aus mitgerissenem Gas umhüllt. Der mit weiterer Eintauchtiefe erfolgende Zusammenbruch der Gashülle führt zur itensiven Bildung feinster, sogenannter Primärblasen (<0,5 mm Ø), die sich konusförmig in Strahlrichtung ausbreiten. Infolge des Impulsaustausches zwischen Hochgeschwindigkeits-Zweiphasenstrahl und umgebender Flüssigkeit wird diese nach den Gesetzen der Freistrahlausbreitung zunehmend in die Zweiphasenregion eingeschleppt. Die Abnahme der Strahlgeschwindigkeit und die Koaleszenz von Primärblasen führt zur Bildung größerer Sekundärblasen (ca. 2 – 3 mm Ø im System Wasser/Luft), die nur solange der Abwärtsbewegung des Strahls folgen bis ihr Auftrieb die Reibungskräfte des nach unten gerichteten Geschwindigkeitsfeldes übersteigt. Die dann seitlich aus dem Strahlbereich entweichenden Sekundärblasen beschleunigen nach dem sog. Mammutpumpen-(gas/lift)-Prinzip zusätzlich die im strahlfernen Bereich nach oben gerichtete Flüssigkeitsbewegung und bewirken einen verstärkten Flüssigkeitsumlauf.

Wird das Tauchstrahlprinzip in einem oben geschlossenen, Gas/Flüssigkeit-gefüllten Behälter angewandt, in den der Flüssigkeitsstrahl am höchsten Punkt eintritt und werden Gasvolumenanteile und Treibstrahlbedingungen so gewählt, daß der Gaseintrag des Treibstrahls die Abscheidegeschwindigkeit der aus der Flüssigkeit austretenden Sekundärblasen des Gases übersteigt, so verschwindet nach kurzer Zeit der ursprünglich vorhandene Flüssigkeitstrennspiegel im Behälter: In der Flüssigkeit aufsteigende Sekundärblasen des Gases werden vom Treibstrahl erneut erfaßt und unter Zerteilung nach unten in das System eingetragen. Im Gleichgewicht liegt die gesamte Gasphase in dispergierter Form als sogenannter Gas hold-up vor, d. h. eine ursprünglich zusammenhängende Gasphase existiert nicht mehr.

Bei Reaktanden-Kombinationen, die zur Bildung explosibler Gasmischungen führen können, ist jedoch aus sicherheitstechnischen Gründen die Existenz zusammenhängender, explosionsgefährdeter Gasräume in jedem Zeitpunkt des Reaktorbetriebes zu vermeiden, d. h. auch bis zum Erreichen oder nach Verlassen des vorstehend beschriebenen hydrodynamischen Gleichgewichts vollkommener Gasdispersion können solche nicht toleriert werden.

Erfindungsgemäß wurde daher eine Tauchstrahleinrichtung der bekannten, vorstehend beschriebenen Art (US 2 128 311) mit konzentrischem Leitrohr (DE-OS 2 645 780) und am höchsten Punkt des geschlossenen Reaktionsbehälters angeordneten Treibstrahleintritt mit einem in bezug auf die Reaktanden inerten Gas gespült. Danach wurde der Reaktor bis auf einen dem beabsichtigten, nach den Regeln der Technik zu wählenden Gas hold-up entsprechenden Volumenanteil mit flüssigem Reaktionsmedium gefüllt und im inertengefüllten Gasraum über der Flüssigkeit, gegebenenfalls durch Nachdrücken weiterer Inertgases, ein Druck $p_1$ eingestellt. Mit nachfolgender Inbetriebsetzung des Flüssigkeitsumlaufes wird durch den Düsenstrahl eine Dispergierung des Inertgases bewirkt. Erst wenn die vollständige Dispergierung des Inertgasanteils eingetreten ist, d. h. der Tauchstrahlreaktor sich hydrodynamisch in einem Gleichgewicht befindet, wird mit dem Eintrag des gasförmigen Reaktanden begonnen. Der Ort der Zugabe ist dabei unkritisch und liegt zweckmäßig entweder im unteren äußeren Ringraum oder im Bereich der Strahldüse.

Für den Reaktorbetrieb ist es vorteilhaft, den Druck des gasförmigen Reaktanden auf einen vorgegebenen Druck $p_2$ ($p_2 > p_1$) zu begrenzen, wobei $p_2$ über die Reaktionsdauer entweder konstant oder Funktion einer geeigneten Führungsgröße, z. B. Reaktionszeit, Umsatz, Umsatz- bzw. Reaktionsenthalpierate etc. sein kann.

Das Abfahren des laufenden Reaktors kann unter Vermeiden einer zusammenhängenden explosiblen Gasphase dadurch erfolgen, daß ggf. mit weiterem an geeigneter Stelle, beispielsweise am Reaktorkopf zuzuführendem Inertgas der Druck im Reaktor auf einen Wert $p_3$ so eingestellt wird, daß damit die aus den jeweiligen Größen $p_1$, $p_2$ jederzeit bekannte Gaszusammensetzung im Reaktor sicher aus dem Explosionsbereich geführt wird. Bei reinem Sauerstoff als gasförmigem Reaktanden ist dies für die meisten Kohlenwasserstoffe erfüllt, wenn $p_3 > 10$ ($p_2 - p_1$). Eine nach Unterbrechung des Flüssigkeitreibstrahls sich bildende zusammenhängende Gasphase ist mangels Explosibilität unbedenklich; mit ihrer Entspannung ist das Abfahren des Reaktors beendet.

Mit der erfindungsgemäßen Reaktorbetriebsweise besteht in der Druckinertisierung auch im akuten Störungsfall eine zuverlässige Sicherheitsmaßnahme mit dem Vorteil, nach Beseitigung der Störung (z. B. Treibstrahlausfall) den Reaktor ohne Wertproduktverlust erneut starten zu können. Voraussetzung hierfür ist lediglich die vorherige Entspannung des inertisierten Gasinhalts auf einen Druck $\approx p_1$.

Zur Systemüberwachung und gegebenenfalls Aktivierung der Sicherheitseinrichtungen können mittelbare (Flüssigkeitsströmung, Druckdifferenz an Treibstrahldüse, elektrisch/mechanischer Ausfall der Flüssigkeitsumwälzpumpe) und unmittelbare Größen (Dichteänderungen, Gaskonzentration am Reaktorkopf etc.) in mehr oder weniger großer Anzahl und Kombination herangezogen werden. Der erforderliche Überwachungsaufwand ist gegenüber der sogenannten Abgasfahrweise eher geringer, da bei den erfindungsgemäßen Verfahren von einer weitgehenden Homogenität des Reaktorinhalts ausgegangen werden kann, einer Bedingung, die bei Abgasbetrieb bekanntlich nicht gewährleistet ist.

Mit der Erfindung erzielte Vorteile bestehen insbesondere darin, daß

— das hydrodynamische Starten des Reaktors nicht mit sicherheitstechnisch bedenklichem gasförmigem Reaktanden (z. B. Sauerstoff), sondern mit einem Inertgas erfolgt. Bei der Reaktion eventuell eingesetzter Katalysator kann dem System von vornherein zugegeben werden und liegt bei Reaktionsbeginn (z. B. $O_2$-Zufuhr) im Reaktor in homogener Verteilung vor.

— zeitweilig hohe Reaktionsraten nicht, wie bei alleiniger Anwesenheit mengenstrommäßig begrenzter gasförmiger Reaktanden zu deren unter Umständen völligem Verbrauch und damit Zusammenbruch des inneren Reaktorumlaufs führen können, sondern bei der erfindungsgemäßen Verfahrensweise das Reaktionsgas dem System mit der Geschwindigkeit und zu dem Zeitpunkt zugeführt werden kann, wie dies reaktionschemisch oder -technisch am vorteilhaftesten ist. Selbst völlige Unterbrechung der Reaktionsgasversorgung bei hoher Umsatzrate ist unbedenklich; der Reaktordruck sinkt dann bei Aufrechterhaltung der Gas-Dispergierung kontrolliert bis auf den Anfangsdruck $p_1$ des Inertgas hold-ups ab. Im Betriebszustand pendelt der Reaktor zwischen $p_1$ ([Reaktionsgas] = min.) und zulässigem Druck $p_2$ ([Reaktionsgas] = max.), d. h. sowohl pulsierende Reaktionsgaszufuhr (z. B. aus Gründen begrenzter Wärmeübertragungskapazität) als auch kontinuierliche, verbrauchsentsprechende Gaszufuhr sind möglich.

— über das in weiten Grenzen frei zu wählende Druckverhältnis $p_1/p_2$ die Inert-/Reaktionsgas-Zusammensetzung eingestellt und den gewünschten Reaktionsbedingungen angepaßt werden kann.

— die Inertgaspufferung im Reaktor in einfacher Weise einen sogenannten Hydrospeicher ohne die Gefahr unkontrollierter Seggregation (Gas/flüssig, flüssig/fest) ersetzt und ein zusätzlicher, auch sicherheitstechnisch interessanter Freiheitsgrad für den Reaktorbetrieb erhalten wird.

— mit der Inertgaspufferung im Reaktor ein umweltfreundlicher, emissionsarmer Betrieb auch für solche Gas/flüssig-Reaktionen möglich wird, die ansonsten wegen der Bildung explosibler Gasmischungen einen inertisierten Abgasbetrieb erfordern, der ohne kostspielige Rückgewinnungseinrichtungen zusätzlich zu entsprechenden Wertproduktverlusten führt.

Das folgende Beispiel einer oxidativen Kupplung eines Alkylphenols mit reinem Sauerstoff zu Polyphenylenoxid (PPO) soll die Erfindung erläutern. In gleicher Weise können selbstverständlich auch andere Gas/flüssig-Reaktionen mit gasförmigen Oxidantien durchgeführt werden, die ansonsten zur Bildung explosibler Gasmischungen neigen.

Die Zusammensetzung der Reaktionsmischung bezieht sich, soweit nicht anders angegeben, auf Angaben in Gewichtsteilen.

### Beispiel

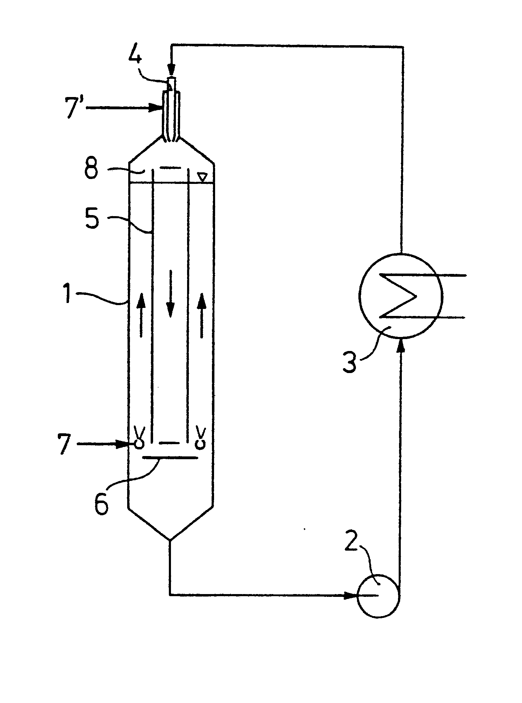

In einem in Fig. 1 schematisch dargestellten Reaktionsapparat der in nachfolgender Tabelle aufgelisteten Hauptdimensionen, bestehend aus einem oben und unten mit gewölbtem Boden verschlossenen zylindrischen Teil 1, aus dem am tiefsten Punkt über einen außenliegenden, mit einer Flüssigpumpe 2 und einem Wärmetauscher 3 versehenen Umwälzkreis Flüssigkeit abgezogen, diese am obersten Punkt des Reaktors über eine Düse 4 in abwärts gerichtetem Strahl zurückgeführt und in einem konzentrisch zum Flüssigkeitsstrahl angeordneten Leitrohr 5 auf den flüssigen Reaktorinhalt trifft und an einer Umlenkplatte 6 umgelenkt wird, wurde bei ruhendem Flüssigkeitsumlauf in den mit Stickstoffgas gefüllten Reaktor bei geöffneter Gassammelleitung folgende Reaktionsmischung eingefüllt: Zu einer gerührten Vorlage von 1,82 Teilen Cu-(I)-Bromid, 21,8 Teilen Di-n-Butylamin und 2 Teilen 2,6-Dimethylphenol ( = DMP) wurde bei 20° C unter Stickstoff eine Lösung von 204 Teilen DMP in 1645 Teilen Toluol gegeben.

Von dieser Mischung wurde soviel in den Reaktor gegeben, daß ein $N_2$-gefüllter Gasraum 8 entsprechend 10% des Reaktorgesamtvolumens bestehen blieb. Beim Verschließen des befüllten Reaktors herrschte am Kopf ein Druck $p_1 = 1$ bar (abs.). Nach Inbetriebsetzung der Flüssigkeitsumwälzpumpe 2 wurde deren Drehzahl so geregelt, daß an der Strahldüse 4 eine Druckdifferenz von ca. 2,5 bar (abs) sich einstellte. Sobald unter der Wirkung des Flüssigkeitstreibstrahls eine vollständige Dispersion des am Reaktorkopf befindlichen Stickstoffgases erreicht war, d. h. keine zusammenhängende Gasphase mehr existierte, was nach wenigen Sekunden der Fall war, wurde Sauerstoffgas entweder in den äußeren Ringraum 7 am unteren Ende des Leitrohres 5 oder am Kopf des Reaktors im Bereich der Strahldüse 7' so zugegeben, daß die Reaktorinnentemperatur einen Wert von $T = 30°$ C nicht überschreitet und der Reaktorinnendruck $p_2$ am Kopf maximal 2 bar (abs) betrug.

Nach 90 Minuten wurde die Sauerstoffzufuhr unterbrochen und der Druck im Reaktor mit Stickstoff auf 100 bar (abs) erhöht. Nach Unterbrechung des Flüssigkeitsumlaufs wurde der Reaktor über eine Gassammelleitung entspannt und die polymere Reaktionslösung mit der etwa 3fachen Menge eines Nichtlösers, z. B. Methanol versetzt. Das sich als Niederschlag abscheidende Polyphenylenoxid hatte nach dem Abtrennen und Trocknen eine Intrinsik-Viskosität von 0,55 dl/g, gemessen in Chloroform bei 30° C.

Tabelle

Geometrische Dimensionen des Reaktionsapparates

| | |
|---|---|
| Gesamtvolumen, 1 | 11,2 |
| Durchmesser D des zyl. Teils, mm | 108 |
| Länge des zylindr. Teils | 8,3 D |
| Durchmesser des inneren Leitrohres | 0,40 D |
| Länge des inneren Leitrohres | 6,5 D |
| Düsen-Durchmesser | 0,04 D |
| Abstand Düsenmund/Oberkante Leitrohr | 0,45 D |

### Patentansprüche

1. Verfahren zur Vermeidung einer zusammenhängenden explosionsfähigen Gasphase in einem Gas/flüssig-Reaktor, bestehend aus einem nach oben abgeschlossenen Hüllrohr, in das aus einer oder mehreren, am höchsten Punkt des Reaktors angeordneten Düsen ein oder mehrere, von einem Flüssigkeitspumpkreis gespeiste, nach unten gerichtete Flüssigkeitsstrahlen austreten, dabei eine zu durchdringende Gasphase mitreißen und in die Flüssigkeit eintragen und letztlich zu einer vollständigen Gasdispersion führen, dadurch gekennzeichnet, daß vor Inbetriebsetzung des Flüssigkeitsumlaufes der ruhende Reaktor nur soweit mit Reaktionsflüssigkeit gefüllt wird, daß ein dem späteren Gas-holdup unter Betriebsbedingungen entsprechender Gasraum am Kopf des Reaktors bestehen bleibt, dieser Gasraum mit einem in bezug auf die Reaktion inerten Gas des Druckes $p_1$ gefüllt wird, und die gasförmige Reaktionskomponente dem Reaktor erst zugeführt wird, wenn unter der Wirkung des oder der Flüssigkeitstreibstrahlen eine Dispersion des inerten Gases derart erfolgt ist, daß eine zusammenhängende Gasphase nicht mehr existiert.

2. Verfahren nach Anspruch 1, dadurch gekennzeichnet, daß die Zufuhr des Reaktionsgases auf einen Druck $p_2 > p_1$ begrenzt ist.

3. Verfahren nach Anspruch 1 und 2, dadurch gekennzeichnet, daß das Reaktionsgas kontinuierlich zugegeben wird.

4. Verfahren nach Anspruch 1 und 2, dadurch gekennzeichnet, daß das Reaktionsgas intermittierend zugegeben wird.

5. Verfahren nach Anspruch 1 und 2, dadurch gekennzeichnet, daß das Reaktionsgas als Funktion einer geeigneten Führungsgröße zugegeben wird.

6. Verfahren nach Anspruch 1 bis 5, dadurch gekennzeichnet, daß vor Außerbetriebsetzung des die Gasdispersion bewirkenden Flüssigkeitstreibstrahls der Partialdruck des Intertgases im Reaktor mindestens soweit erhöht wird, daß das Reaktionsgas keine explosible Gasmischung mehr bilden kann, d. h. sein Partialdruck außerhalb des Explosionsbereiches liegt.

7. Verwendung des Verfahrens nach Anspruch 1 bis 6 für die oxidative Kupplung von Alkylphenolen mit Sauerstoff zu Polyphenylenoxiden.

## Claims

1. A method of avoiding a coherent explosive gas phase in a gas/liquid reactor comprising a tubular body which is closed at the top and into which one or more jets of liquid, which are fed from a pumped-liquid circulation system and are directed downward, emerge from one or more nozzles located at the highest point of the reactor, and entrain a gas phase which is to be dispersed, introduce it into the liquid and finally produce complete dispersion of the gas, wherein, before the liquid circulation system is put into operation, the inactive reactor is charged with such an amount of liquid reactant that a gas space corresponding to the subsequent gas hold-up under operating conditions remains at the top of the reactor, said gas space is filled with a gas, at a pressure $p_1$, which is inert under the reaction conditions, and the gaseous reactant is fed to the reactor only after the inert gas has been dispersed under the action of the liquid jet or jets, so that a coherent gas phase no longer exists.

2. A method as claimed in claim 1, wherein the reactant gas is fed in at a pressure which is restricted to $p_2 > p_1$.

3. A method as claimed in claims 1 and 2, wherein the reactant gas is introduced continuously.

4. A method as claimed in claims 1 and 2, wherein the reactant gas is introduced intermittently.

5. A method as claimed in claims 1 and 2, wherein the introduction of the reactant gas is governed by a suitable control parameter.

6. A method as claimed in claims 1 to 5, wherein, before the liquid jet which disperses the gas is shut off, the partial pressure of the inert gas in the reactor is increased to such an extent that the reactant gas can no longer form an explosive gas mixture, i. e. its partial pressure is outside the explosive range.

7. The use of a Process as claimed in claims 1 to 6 for the oxidative coupling of alkylphenols with oxygen to give polyphenylene oxides.

## Revendications

1. Procédé pour éviter une phase gazeuse explosible, cohérente, dans un réacteur gaz/liquide, constitué par un tube-enveloppe fermé dans le haut, dans lequel pénètrent, par une ou plusieurs buses situées au point le plus haut du réacteur, un ou plusieurs jets de liquide dirigés vers le bas et alimentés par un circuit de pompage de liquide, y entraînent une phase gazeuse à traverser et l'incorporent dans le liquide et enfin conduisent à une dispersion de gaz totale, caractérisé par le fait que, avant de mettre le liquide en circulation, on ne remplit le réacteur au repos de liquide de réaction que juste assez pour que subsiste en tête du réacteur une chambre à gaz correspondant, dans les conditions de marche, à la retenue de gaz ultérieure, on remplit cette chambre à gaz avec un gaz à une pression $p_1$, inerte vis-à-vis de la réaction, et l'on n'alimente le réacteur avec les composants de réaction gazeux que lorsque, sous l'action du ou des jets moteurs de liquide, se produit une dispersion du gaz inerte telle qu'il n'existe plus de phase gazeuse cohérente.

2. Procédé selon la revendication 1, caractérisé par le fait que l'amenée de gaz de réaction est limitée à une pression $p_2 > p_1$.

3. Procédé selon la revendication 1 et 2, caractérisé par le fait que le gaz de réaction est ajouté en continu.

4. Procédé selon la revendication 1 et 2, caractérisé par le fait que le gaz de réaction est ajouté de manière intermittente.

5. Procédé selon la revendication 1 et 2, caractérisé par le fait que le gaz de réaction est ajouté en fonction d'une grandeur pilote convenable.

6. Procédé selon l'une des revendications 1 à 5, caractérisé par le fait qu'avant de mettre hors service le jet moteur de liquide provoquant la dispersion de gaz, on élève la pression partielle du gaz inerte dans le réacteur au moins jusqu'à ce que le gaz de réaction ne puisse plus former de mélange de gaz explosible, c'est-à-dire que sa pression partielle soit en dehors de la zone d'explosion.

7. Utilisation du procédé selon l'une des revendications 1 à 6, pour la copulation par oxydation d'alkylphénols et d'oxygène pour l'obtention de polyphénylènoxydes.